# EUROPÄISCHE PATENTSCHRIFT

(11) **EP 1 686 353 B1**
(45) Veröffentlichungstag und Bekanntmachung des Hinweises auf die Patenterteilung: **01.02.2017**
(21) Anmeldenummer: 05026342.5
(22) Anmeldetag: 02.12.2005
(51) Int. Cl.: G01F 1/32

(54) **Durchflussmessgerät mit einsteckbarer Sensorbaugruppe**
Flowmeter with insertable sensor unit
Débitmètre avec module detecteur insérable

(30) Priorität: 24.12.2004 DE 102004063499
(43) Veröffentlichungstag der Anmeldung: 02.08.2006
(73) Patentinhaber: HUBA CONTROL AG, 5436 Würenlos (CH)
(72) Erfinder: Anliker, Peter, 5024 Küttigen (CH); Bächli, Rolf, 5436 Würenlos (DE)
(74) Vertreter: Maier, Daniel Oliver

(56) Entgegenhaltungen:
- WO-A-89/05965
- US-A- 5 869 772
- PATENT ABSTRACTS OF JAPAN Bd. 2003, Nr. 12, 5. Dezember 2003 (2003-12-05) & JP 2004 069500 A (SAGINOMIYA SEISAKUSHO INC), 4. März 2004 (2004-03-04)

## Beschreibung

Die Erfindung betrifft ein Durchflussmessgerät gemäss dem Oberbegriff des Anspruchs 1 und ein Verfahren zum Herstellen eines derartigen Durchflussmessgerätes gemäss dem Anspruch 11.

Bei Durchflussmessgeräten basierend auf dem Vortex-Prinzip, erzeugt ein Sensor ein elektrisches Signal mit einer Charakteristik, die abhängig von der Durchflussgeschwindigkeit eines durch einen Durchflusskanal strömenden Mediums ist. Ermöglicht wird dies durch Druckvariationen in dem Medium, hervorgerufen durch stromaufwärts an den Abrisskanten eines Staukörpers erzeugte und mit dem Medium strömende Kármán'sche Wirbel, die vom Sensor detektiert werden. Die zeitliche Abfolge der detektierten Druckvariationen ist dabei bestimmt durch die Durchflussgeschwindigkeit des Mediums.

Dokument JP-A-2004 069500 offenbart ein Durchflussmessgerät basierend auf dem Vortex-Prinzip mit einem Rohrelement, in welches eine Grundplatte einsteckbar ist. Ein Staukörper ist integral mit dem Grundkörper ausgebildet und in eine Ausnehmung der Grundplatte ist ein Sensorelement eingesteckt. Über der Grundplatte ist in einem separaten Gehäuse eine Auswerteelektronik untergebracht.

Ein weiteres Durchflussmessgerät basierend auf dem Vortex-Prinzip ist aus Dokument US-A-5 869 733 bekannt.

Aus der WO 97/15807 ist ein Durchflussmessgerät nach dem Vortex-Prinzip bekannt. Dabei ist ein Piezoelement als ein Biegesensor stromabwärts von einem Staukörper in einem Durchflusskanal angeordnet. Der Staukörper ist integraler Bestandteil eines den Durchflusskanal umgebenden Rohrelements. Ebenfalls einstückig mit dem Rohrelement ist ein Gehäuseteil zur Aufnahme einer Auswertelektronik ausgeformt, die ein elektrisches Signal in Abhängigkeit von der Durchflussgeschwindigkeit bereitstellt.

Der vorliegenden Erfindung liegt die Aufgabe zugrunde, ein robustes, preiswertes und einfach herzustellendes Durchflussmessgerät zu schaffen, welches schnell zu montieren ist.

Diese Aufgabe ist erfindungsgemäss durch ein Durchflussmessgerät mit den Merkmalen des Anspruchs 1 und ein Verfahren zur Herstellung eines Durchflussmessgerätes gemäss Anspruch 11 gelöst.

Weitere bevorzugte Ausgestaltungen des erfindungsgemässen Durchflussmessgerätes bilden den Gegenstand der abhängigen Patentansprüche.

Die Erfindung ermöglicht ein modular aufgebautes, Durchflussmessgerät auszubilden, bei dem eine Sensorbaugruppe in ein Rohrelement, durch welches ein Medium hindurchfliesst, eingesteckt ist. Die Sensorbaugruppe weist einen Sensorbaugruppengrundkörper, einen Staukörper, ein Sensorelement und eine Auswerteelektronik auf. Die Sensorbaugruppe ist dicht in eine Öffnung des Rohrelements, welches einen Anschluss an ein bestehendes Rohrleitungssystem ermöglicht, eingesteckt. Dies hat den Vorteil, dass die Sensorbaugruppe unabhängig von der Endmontage gefertigt, geprüft, kalibriert und am Ort der Endmontage schnell und zeitsparend eingesteckt bzw. eingebaut werden kann.

Am Sensorbaugruppengrundkörper ist integral der Staukörper mit Abrisskanten ausgebildet, die in einem Medium, welches durch einen vom Rohrelement gebildeten Durchflusskanal strömt, Wirbel erzeugen. Die integrale Ausbildung ermöglicht eine kosteneffiziente Fertigung, beispielsweise in einem Spritzgussverfahren, und vermeidet eine zeitaufwendige Justage des Staukörpers bei der Endmontage am Rohrelement.

Die im durchfliessenden Medium hervorgerufenen Wirbel bewirken Biegungen eines zum Schutz vor dem Medium von einer elastischen Hülse umgebenen, plattenförmigen piezoelektrischen Sensorelements. Bei den Biegungen erzeugt das piezoelektrische Sensorelement ein elektrisches Signal. Die elektrisch mit dem Sensorelement verbundene Auswertelektronik ermittelt dann in Abhängigkeit von der Durchflussgeschwindigkeit des Mediums einen entsprechenden Ausgabewert. Wie oben bemerkt, ist die Auswerteelektronik ebenfalls ein modularer Bestandteil der Sensorbaugruppe und kann somit auch unabhängig von der Endmontage kosteneffizient hergestellt werden. Als Resultat ist somit eine Fertigung, eine Prüfung und eine Kalibrierung der gesamten Sensorbaugruppe vor ihrer Endmontage möglich.

Beim erfindungsgemässe Verfahren zur Herstellung eines derartigen Durchflussmessgerätes wird zunächst die Hülse mit dem piezoelektrischen Sensorelement in den Sensorbaugruppengrundkörper dicht eingesetzt. Anschliessend erfolgt das Einsetzen der Auswertelektronik in den Sensorbaugruppengrundkörper und ein elektrisches Verbinden elektrischer Anschlüsse des piezoelektrischen Sensorelements mit elektrischen Kontakten der Auswertelektronik, vorzugsweise durch Schweissen, um die Sensorbaugruppe fertigzustellen. Diese ersten Schritte können räumlich und zeitlich getrennt vom letzten Schritt, dem dichtenden Aufsetzen bzw. Einsetzen der Sensorbaugruppe in die entsprechende Aufnahme am Rohrelementes, erfolgen. Dadurch ergibt sich der bereits oben genannte Vorteil, dass die Herstellung, das Testen und die Kalibrierung der Sensorbaugruppe unabhängig von der Endmontage des Durchflussmessgerätes erfolgen kann. Ebenfalls unabhängig davon ist ein Einbau der Rohrelemente in ein Rohrleitungssystem möglich.

Ein bevorzugtes Ausführungsbeispiel der Erfindung ist in der Zeichnung dargestellt. Dabei zeigen:
- Fig. 1:: einen Längsschnitt durch ein erfindungsgemässes Durchflussmessgerät;
- Fig. 2:: eine Schnittdarstellung des in Fig. 1 gezeigten Durchflussmessgerätes entlag der Linie II - II;
- Fig. 3:: eine perspektivische Ansicht einer einsteckbaren Sensorgaugruppe des in Fig. 1 und Fig. 2 gezeigten Durchflussmessgerätes; und
- Fig. 4:: eine Explosionsdarstellung des in Fig. 1 und Fig. 2 gezeigten Durchflussmessgerätes.

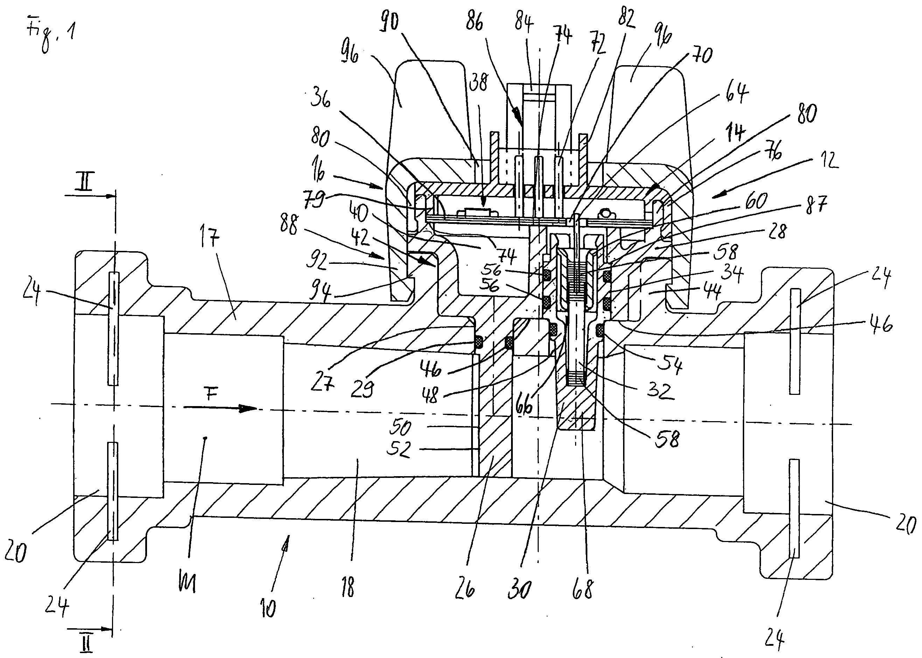

Die Figuren 1, 2 und 4 zeigen eine bevorzugte Ausführungsform eines erfindungsgemässen Durchflussmessgerätes, dass ein Rohrelement 10, eine Sensorbaugruppe 12 mit einem Deckel 14 und eine Verschlusskappe 16 aufweist.

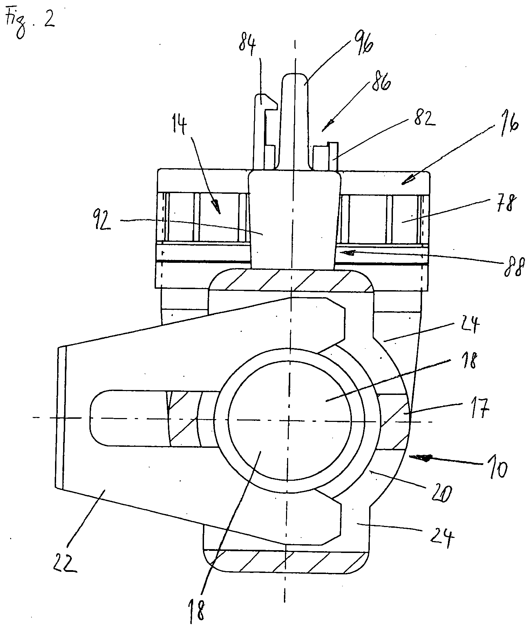

Eine im Wesentlichen hohlzylinderförmige Rohrelementwandung 17 des Rohrelements 10 begrenzt dabei einen Durchflusskanal 18, durch welchen ein Medium M in eine Durchflussrichtung F strömt. An den beiden Endbereichen des Durchflusskanals 18 sind jeweils Anschlussstutzen 20 zum Anschluss an ein Rohrleitungssystem bekannter Bauart ausgeformt. Die Verbindungen zum Rohrleitungssystem sind durch spreizbare Befestigungsclips 22, wie in Fig. 2 gezeigt, gesichert. Sie greifen in das Rohrelement 10 durch jeweils zwei, in den Anschlussstutzen 20 ausgebildete Schlitze 24 ein und umschliessen bereichsweise zugeordnete Nuten des Rohrleitungssystems. Alternativ können Verbindungen zu einem Rohrleitungssystem beispielsweise auch mittels Gewindehülsen, durch Löt-, Schrumpf- oder Schweiss-, Rast-, Bajonett- oder andere Arten von Schnellverbindungen hergestellt werden.

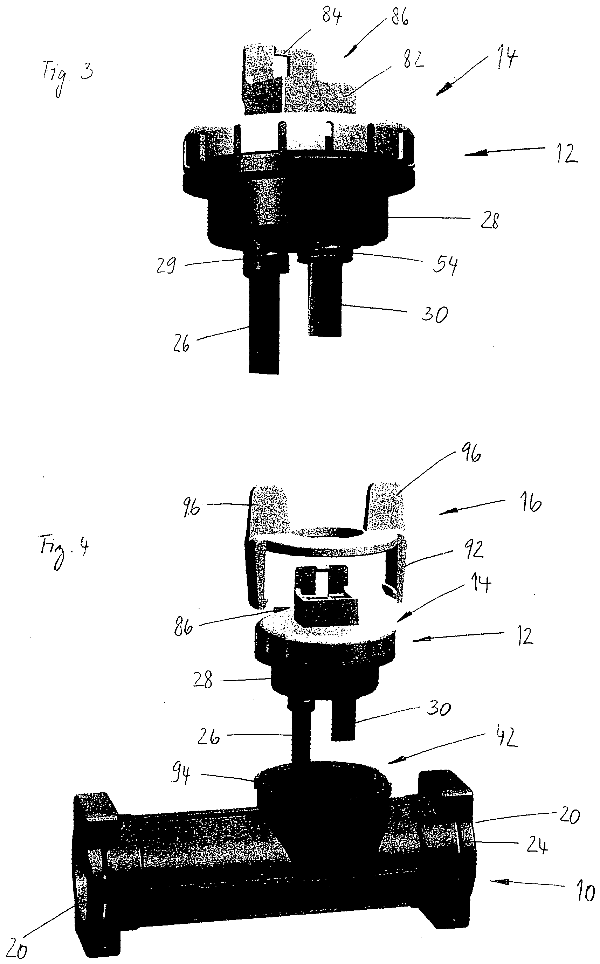

In Durchflussrichtung F stromabwärts folgt nach dem Anschlussstutzen 20 im Durchflusskanal 18 ein Längenabschnitt, der ausreicht Strömungen im durchfliessenden Medium M zu beruhigen, ein Staukörper 26. Der Staukörper 26 ist Teil der Sensorbaugruppe 12 und integral an einem Sensorbaugruppengrundkörper 28 ausgebildet. Das Anströmen des Staukörpers 26 mit einem beruhigten und daher radial nahezu uniformen Durchflussprofil ist für präzise und reproduzierbare Messungen von Bedeutung. Der Staukörper 26 ist durch eine Öffnung 27 in der Rohrelementwandung 17 in den Durchflusskanal 18 eingesteckt. Mittels eines in Fig. 1 und Fig. 3 gezeigten Dichtungsringes 29 im Ansatzbereich des Staukörpers 26 ist ein Ausfliessen des Mediums M aus dem Durchflusskanal 18 verhindert.

Neben dem am Sensorbaugruppengrundkörper 28 ausgebildeten Staukörper 26 nimmt der Sensorbaugruppengrundkörper 28 Elemente des Sensorbaugruppe 12 auf und wird vom Deckel 14 überdeckt. Zu diesen Elementen gehören eine elastische Hülse 30 mit einem piezoelektrischen Sensorelement 32, die in einer dafür vorgesehenen Ausnehmung 34 des Sensorbaugruppengrundkörpers 28 steckt, und eine Leiterplatte 36 zur Aufnahme einer Auswerteelektronik 38, die ihren Platz in einem zentralen zylinderförmigen Innenraum 40 des Sensorbaugruppengrundkörpers 28 einnimmt. Die Elemente werden später im Einzelnen detailliert beschreiben. Eine perspektivischen Aussenansicht der in das Rohrelement 10 einsteckbaren Sensorbaugruppe 12 mit dem Deckel 14 ist in Fig. 3 gezeigt.

Der Sensorbaugruppengrundkörper 28 der Sensorbaugruppe 12 ist in einer Aufnahme 42 am Rohrelement 10 aufgenommen. Die in Fig. 1 und Fig. 4 gezeigte Aufnahme 42 ist durch eine umlaufende Aufnahmewandung 44 und eine Sitzfläche 46, welche die Öffnung 27 für den Staukörper 26 und eine weitere Öffnung 48 für die Hülse 30 mit dem piezoelektrischen Sensorelement 32 einschliesst, gebildet. Der Sensorbaugruppengrundkörper 28 in der gezeigten Ausführung ist aus Kunststoff in einem Spritzgussverfahren gefertigt und kann mit den Elementen 30, 38 unabhängig vom späteren Installationsort bestückt, getestet und kalibriert werden.

Der Staukörper 26 hat in einer Ebene senkrecht zu seiner Längsachse vorzugsweise einen dreiecksförmigen Querschnitt. Dabei ist eine stromaufwärts angeordnete Seitenfläche 50 des Staukörpers 26 rechtwinklig zur Durchflussrichtung F ausgerichtet, so dass sie frontal vom Medium M angeströmt wird. Zwei diese Seitenfläche 50 begrenzende Abrisskanten 52 führen zu einem Strömungsabriss und erzeugen im Medium M, stromabwärts eine Kärmän'sche Wirbelfolge. Die mit dem Abfliessen der Wirbel verbundenen Druckänderungen im Medium M werden mittels des stromabwärts positionierten und zum Schutz vor dem Medium M in der flexiblen Hülse 30 eingefassten piezoelektrischen Sensorelementes 32 detektiert. Das Medium M verlässt das Durchflussmessgerät durch den weiter stromabwärts folgenden Anschlussstutzen 20 in das Rohrleitungssystem.

Das plattenförmige piezoelektrische Sensorelement 32 ist, wie bereits oben erwähnt, in der Hülse 30 eingefasst. Durch diese Hülse 30 ist das piezoelektrische Sensorelement 32 vor einem Kontakt mit dem Medium M, beispielsweise auch einer chemisch-aggressivem Flüssigkeit, und vor Abrasion, etwa durch im Medium M mitgeführte Partikel, geschützt. Die Hülse 30 ist aus einem flexiblen Kunststoff hergestellt. Im Ansatzbereich ist die Hülse 30 mittels eines in Fig. 1 und Fig. 3 gezeigten weiteren Dichtungsringes 54 durch die weitere Öffnung 48 in der Rohrelementwandung 17 und mittels zwei weiterer Dichtungsringe 56 im Sensorbaugruppengrundkörper 28 dichtend eingesteckt.

Das piezoelektrische Sensorelement 32 ragt zungenartig in den Durchflusskanal 18 hinein und ist im zur Längsachse des Durchflusskanals 18 gerichteten Endbereich mittels eines Klebemittels 58 in der Hülse 30 verklebt. Im gegenüberliegenden Endbereich ist das Sensorelement 32 in einer Innenhülse 60 mittels des Klebemittels 58 eingeklebt. In diesem festen Endbereich dient das Verkleben neben der festen Lagerung des Sensorelements 32 auch dem mechanischen Schutz elektrischer Anschlussdrähte 64, die ein durch eine Biegung des Sensorelements 32 hervorgerufenes elektrisches Signal zur Auswertelektronik 38 weiterleiten.

Die Innenhülse 60 mit dem piezoelektrischen Sensorelement 32 ist fest in die im Sensorbaugruppengrundkörper 28 steckende Hülse 30 eingerastet und auf diese Weise fest im Sensorbaugruppengrundkörper 28 verankert. Sowohl die Hülse 30 auch die Innenhülse 60 können durch ein formschlüssiges Zusammenwirken von flügelartig ausgeformten Fortsätzen mit entsprechenden Nuten in der Hülse 30 bzw. im Sensorbaugruppengrundkörper 28 gegen eine Verschiebung bzw. Verdrehung gesichert werden. Die Verrastung der Innenhülse 60 weist ausserdem Lücken für einen Luftdurchlass vom Raum 66, der von der Hülse 30 und der Innenhülse 60 begrenzt ist, auf. Dies ist beim Verkleben des Sensorelements 32 in der Hülse 30 für eine Verdunsten von Lösungsmitteln des Klebemittels 58, zum Verhindern einer Kondenswasserbildung und zum Druckausgleich bei temperaturbedingter Volumenänderung des Raums 66 oder/oder beim Biegen des Sensorelements 32 und dabei möglicherweise hervorgerufenen Verformungen der Hülse 30 vorteilhaft.

Neben der vorgängig erwähnten Schutzfunktion kommt der Hülse 30 die Aufgabe zu, die Angriffsfläche 68 für die das piezoelektrische Sensorelement 32 biegende Wirbel zu vergrössern und dadurch das elektrische Ausgangssignal des piezoelektrischen Sensorelements 32 zu erhöhen. Dies erfolgt einerseits durch eine Verlängerung der Angriffsfläche 68 entlang der Längsachse des piezoelektrischen Sensorelements 32 in den Durchflusskanal 18 hinein und/oder andererseits durch eine Vergrösserung der Angriffsfläche 68 parallel zur Durchflussrichtung F des Mediums M. Durch eine Vergrösserung der Angriffsfläche 68 wird die Biegung des piezoelektrischen Sensorelements 32 hebelartig unterstützt.

Das elektrische Ausgangssignal des piezoelektrischen Sensorelements 32 wird über die elektrischen Anschlussdrähte 64 zu der die Auswerteelektronik 38 aufnehmenden Leiterplatte 36 übertragen. Dazu sind die Anschlussdrähte 64 durch ein Loch 70 in der Leiterplatte 36 geführt und werden mit entsprechenden Kontaktflächen mittels Lot verlötet.

Durch den modularen Aufbau des Sensorbaugruppe 12 kann im Fall einer Fehlfunktion die Auswerteelektronik 38 schnell und effizient ausgetauscht werden ohne beispielsweise das Rohrelement 10 aus dem Rohrleitungssystem zu entfernen.

Mittig auf der Leiterplatte 36 befinden sich drei elektrische Anschlusskontakte 72, die zum Zusammenwirken mit einem entsprechend ausgeformtem Stecker ausgebildet sind. Die Anschlusskontakte 72 treten durch den die Leiterplatte 36 überdeckenden Deckel 14 hindurch und weisen mit ihrem freien Ende vom Rohrelement 10 weg. Die Leiterplatte 36 kann in speziellen Ausführungen zum Schutz vor elektromagnetischen und mechanischen Einflüssen beispielsweise sandwichartig von Schutzblechen umschlossen oder für einen Luftabschluss teilweise oder vollständig, beispielsweise mit einem Giessharz, eingegossen sein.

Die Leiterplatte 36 mit der Auswertelektronik 38 liegt auf Auflageflächen 74, die dem Innenraum 40 des Sensorbaugruppengrundkörpers 28 zugewandt sind, auf. Die Auflageflächen 74 sind insbesondere im radial äusseren Endbereich der Leiterplatte 36 und in einem zentrischen Bereich ausgebildet. Die Leiterplatte 36 wird durch den gegenüber den Auflageflächen 74 angeordnetem Deckel 14 festgeklemmt. Der Deckel 14 ist schalenförmig und mit einer im Wesentlichen kreisförmigen Grundfläche ausgebildet. Der Deckel 14 weist radial aussen ein umlaufendes, vorzugsweise nahezu senkrecht von seiner Grundfläche abstehendes, im Wesentlichen U-förmiges Deckelprofil 76 auf. Das Deckelprofil 76 ist, wie insbesondere in Fig. 2, Fig. 3 und Fig. 4 gezeigt, in gleichmässigen Abständen an seinem radial aussen liegenden Aussenkranz 78 unterbrochen. Insbesondere durch einen Innenkranz 79 des Deckelprofils 76, der dichtend an einem umlaufenden Dichtungsrand 80 des Sensorbaugruppengrundkörpers 28 anliegt, wird ein im Sensorbaugruppengrundkörper 28 gebildeter, die Auswerteelektronik 38 aufnehmender Innenraum 40 dicht verschlossen.

In unmittelbarer Nähe der aus dem Deckel 14 heraustretenden elektrischen Anschlusskontakte 72 ist auf der dem Deckelprofil 76 gegenüberliegenden Aussenseite des Deckels 14 eine Steckdosenwandung 82 mit einer Steckerraste 84 zum rastenden Verbinden mit dem Stecker ausgeformt. Eine durch die Anschlusskontakte 72, die Steckdosenwandung 82 und die Steckerraste 84 gebildete Steckdose 86 dient der Verbindung mit elektrischen Leitungen für die Weiterleitung der vorverarbeiteten elektrischen Signale und gegebenenfalls auch für die Übergabe von Steuersignalen oder für die elektrische Speisung des Durchflussmessgerätes.

Wie bereits erwähnt sind die beiden Öffnungen 27, 48 in der Rohrelementwandung 17 zum Einführen des Staukörpers 26 und der Hülse 30 mit dem umschlossenen piezoelektrischen Sensorelement 32 ausgebildet. Durch die unterschiedlichen Durchmesser und gegebenenfalls auch durch die unterschiedliche Form der Öffnungen 27, 48 wird dabei ein lagerichtiges Einführen gewährleistet.

Mittels den insbesondere in Fig. 3 gut sichtbaren Dichtungsringen 29, 54 ist ein Auslaufen des Mediums M aus dem Durchflusskanal 18 in die Umgebung und ein Eindringen des Mediums M in die Hülse 30 bzw. den Sensorbaugruppengrundkörper 28 verhindert. Bei hohen Betriebsdrücken des durchfliessenden Mediums M von beispielsweise bis zu 16·10⁵ Pa, für welche das erfindungsgemässe Durchflussmessgerät bestimmt ist, ist es dabei besonders vorteilhaft, dass die Querschnitte der Öffnungen 27, 48 bzw. der darin befindlichen Ansatzbereiche des Staukörpers 26 und der Hülse 30 klein gewählt sind, um die auf den Sensorbaugruppengrundkörper 28 und die Dichtungsringe 29, 54 durch das Medium M wirkenden Kräfte klein zu halten. Allerdings können alternativ auch beide Öffnungen 27, 48 durch eine einzige Grundkörperöffnung mit einer um den Staukörper 26 und die Hülse 30 umlaufenden Dichtung ersetzt werden. In diesem Fall wird ein Rohrelementabschnitt, der zwischen dem Staukörper 26 und der Hülse 30 den Durchflusskanal 18 durch den Sensorbaugruppengrundkörper 28 selbst begrenzt.

Die in Fig. 1 gezeigte Anordnung mit zwei Öffnungen 27, 48 bietet neben der oben erwähnten, verringerten Kraftwirkung auf den Sensorbaugruppengrundkörper 28 und die Dichtungsringe 29, 54 einerseits den Vorteil eines zusätzlichen formschlüssigen Schutzes gegen ein Verdrehen des Sensorbaugruppengrundkörpers 28 und andererseits kann auf einfache Weise ein fester Sitz der Hülse 30 in der Ausnehmung 34 des Sensorbaugruppengrundkörpers 28 durch ihr Aufliegen auf dem Rohrelement 10 und einer Anschlagschulter 87 in der Ausnehmung 34 gewährleistet werden.

Für eine sichere Befestigung der Sensorbaugruppe 12 mit dem Deckel 14 am Rohrelement 10 übergreift die tellerförmige Verschlusskappe 16 den Deckel 14 und den Sensorbaugruppengrundkörper 28 und wird mittels eines Bajonettverschlusses 88 am Rohrelement 10 gehalten. Die Verschlusskappe 16 ist mit einem zentralen Durchlass 90 für die elektrischen Anschlusskontakte 72 und die Steckdosenwandung 82 ausgestattet. Er weist auf einer ersten, von der Sensorbaugruppe 12 wegweisenden Seite der Verschlusskappe 16 zwei sich gegenüberliegende, zungenartige Bajonettklammern 92 zum bajonett-artigen Zusammenwirken mit an der Aufnahmewandung 44 des Rohrelements 10 ausgeformten Bajonettrasten 94 auf. Auf einer den Bajonettklammern 92 abgewandten zweiten Seite der Verschlusskappe 16 sind zwei sich gegenüberliegende, radial ausgerichtete Flügel 96 als Handgriffelemente zum einfachen Verdrehen der Verschlusskappe 16 ausgeformt.

Alternativ kann die Verschlusskappe 16 beispielsweise auch mit einer Rändelung oder Kanten ausgestattet sein. Neben dem Bajonettverschluss 88 kann eine Halterung am Rohrelement 10 beispielsweise auch mittels einer Überwurfmutter, einem Rast-, Klick-, Spann- oder Klebverschluss erfolgen.

Beim Herstellungsprozess des erfindungsgemässen Durchflussmessgerätes wird zunächst das piezoelektrische Sensorelement 32 in der Innenhülse 60 verklebt. Dann wird Klebemittel 58 in den geschlossenen Endbereich der Hülse 30 getropft und die Innenhülse 60 mit dem piezoelektrischen Sensorelement 32 in die Hülse 30 mit dem noch plastischen Klebemittel 58 eingeführt und eingerastet. Nach einem Aushärten des Klebemittels 58 wird die Hülse 30 mit der Innenhülse 60 und dem piezoelektrischen Sensorelement 32 dichtend in die vorgesehene Ausnehmung 34 des Sensorbaugruppengrundkörpers 28 eingesteckt. Anschliessend setzt man die Auswertelektronik 38 in den Innenraum 40 des Sensorbaugruppengrundkörpers 28 ein und verbindet die elektrischen Anschlussdrähte 64 des piezoelektrischen Sensorelements 32 mit den elektrischen Anschlusskontakten 72 der Auswertelektronik 38 vorzugsweise mittels einer Löttechnik. Nach diesem Schritt erfolgen vorzugsweise eine Funktionsprüfung und Kalibrierung der Sensorbaugruppe 12. Der Deckel 14 wird dann dichtend auf den Sensorbaugruppengrundkörper 28 aufgesetzt und die Sensorbaugruppe 12 rastend geschlossen. Die bis dahin beschriebenen Schritte können räumlich und zeitlich von den weiteren Schritten getrennt durchgeführt werden. Entweder am Produktionsort oder am Ort der vorzunehmenden Installation wird die geprüfte und kalibrierte Sensorbaugruppe 12 dichtend auf die Aufnahme 42 des Rohrelements 10 aufgesetzt und dabei der Staukörper 26 und die Hülse 30 mit dem piezoelektrischen Sensorelement 32 in die vorgesehenen Öffnungen 27, 48 des Rohrelements 10 eingeführt. Abschliessend wird mittels der Verschlusskappe 16 die Sensorbaugruppe 12 mit dem Deckel 14 durch Schliessen des Bajonettverschlusses 88 am Rohrelement 10 befestigt und gesichert. Die Vorgänge des Einsteckens und Verschliessens sind insbesondere anhand von Fig. 4 nachvollziehbar.

Das beschriebene Durchflussmessgerät wird zur Bestimmung von Durchflussgeschwindigkeiten von flüssigen oder gasförmigen Medien M eingesetzt. Aufgrund der bevorzugten Ausführung des Rohrelements 10, des Staukörpers 26 und der Hülse 30 aus Kunststoff, beispielsweise aus Polyamid, ist das erfindungsgemässe Durchflussmessgerät insbesondere für einen Einsatz zur Durchflussmessung von Trinkwasser geeignet.

## Patentansprüche

1. Durchflussmessgerät basierend auf dem Vortex-Prinzip, aufweisend ein Rohrelement (10), das einen Durchflusskanal (18) bildet und mit endbereichsseitig angeordneten Anschlussstutzen (20) zum Anschluss an ein Rohrleitungssystem ausgestattet ist,
einen Staukörper (26) mit Abrisskanten (52), die in einem im Durchflusskanal (18) in eine Durchflussrichtung (F) strömenden Medium (M) Wirbel erzeugen, und
ein plattenförmiges, zum Schutz vor dem Medium (M) von einer elastischen Hülse (30) umgebenes piezoelektrisches Sensorelement (32), welches in einer Ausnehmung (34) eines Sensorbaugruppengrundkörpers (28) steckt und durch eine Öffnung (48) in den Durchflusskanal (18) hineinreicht und dabei hervorgerufen durch die Wirkung der Wirbel ein elektrisches Signal in Abhängigkeit von der Durchflussgeschwindigkeit des Mediums (M) erzeugt, welches von einer elektrisch mit dem piezoelektrischen Sensorelement (32) verbundenen Auswertelektronik (38) weiterverarbeitet wird, wobei der Staukörper (26) integraler Bestandteil des Sensorbaugruppengrundkörpers (28) ist und der Sensorbaugruppengrundkörper (28) in einer Aufnahme (42) des Rohrelements (10) aufgenommen ist, **gekennzeichnet durch** eine Sensorbaugruppe (12), die eigenständig, dicht in das Rohrelement (19) eingesteckt ist und den Sensorbaugruppengrundkörper (28) aufweist sowie das Sensorelement (32) und die Auswerteelektronik (38) aufnimmt, wobei die Auswerteelektronik (38) einen Platz in einem zentralen, zylinderförmigen Innenraum (40) des Sensorbaugruppengrundkörpers (28) einnimmt.

2. Durchflussmessgerät nach Anspruch 1, **dadurch gekennzeichnet, dass** das Rohrelement (10) eine Öffnung (27) zum Einführen des Staukörpers (26) und eine weitere Öffnung (48) zum Einführen der Hülse (30) mit dem piezoelektrischen Sensorelement (32) aufweist.

3. Durchflussmessgerät nach Anspruch 1 oder 2, **dadurch gekennzeichnet, dass** das piezoelektrische Sensorelement (32) an einem in den Durchflusskanal (18) hineinragenden freien Endbereich in der Hülse (30) und/oder an einem bezüglich des Sensorbaugruppengrundkörpers (28) festen Endbereich, der in einer in der Hülse (30) eingerasteten Innenhülse (60) aufgenommenen ist, mittels Klebemittel (58) verklebt und/oder vergossen ist, die Hülse (30) mit dem piezoelektrische Sensorelement (32) dichtend in den Sensorbaugruppengrundkörper (28) eingesteckt ist.

4. Durchflussmessgerät nach einem Ansprüche 1 bis 3, **dadurch gekennzeichnet**, das die Hülse (30) eine Angriffsfläche (68) für die das piezoelektrische Sensorelement (32) biegende Wirbel einerseits entlang der Längsachse des Sensorelements (32) in den Durchflusskanal (18) hinein verlängert und/oder andererseits die Angriffsfläche (68) parallel zur Durchflussrichtung (F) des Mediums (M) vergrössert, um hebelartig die Biegung des piezoelektrischen Sensorelements (32) zu erhöhen.

5. Durchflussmessgerät nach einem der Ansprüche 1 bis 4, **dadurch gekennzeichnet, dass** der Sensorbaugruppengrundkörper (28) aus einem Kunststoff in Spritzguss-Technik hergestellt ist.

6. Durchflussmessgerät nach einem der Ansprüche 1 bis 5, **dadurch gekennzeichnet, dass** das Rohrelement (10) aus einem Kunststoff oder Metall gefertigt ist und senkrecht zur Längsachse des Rohrelements (10) am Anschlussstutzen (20) Schlitze (24) zum Einführen eines Defestigungsclips (22), vorbestimmt zum befestigenden Zusammenwirken mit einer Nut des Rohrleitungssystems, aufweist.

7. Durchflussmessgerät nach einem der Ansprüche 1 bis 6. **dadurch gekennzeichnet, dass** eine Verschlusskappe (15) die Sensorbaugruppe (12) am Rohrelement (10) mittels eines Schnellverschlusses, vorzugsweise mittels eines Bajonettverschlusses (88), befestigt.

8. Durchflussmessgerät nach einem der Ansprüche 1 bis 7, **dadurch gekennzeichnet, dass** die Sensorbaugruppe (12) durch einen Deckel (14) dicht verschlossen ist.

9. Durchflussmessgerät nach Anspruch 8, **dadurch gekennzeichnet, dass** der Deckel (14) schalenförmig ausgebildet ist und mit einer im Wesentlichen kreisförmigen Grundfläche und einem umlaufenden, vorzugsweise nahezu senkrecht von der Grundfläche abstehenden, im Wesentlichen U-förmigen Deckelprofil (76), welches dichtend mit einem ebenfalls umlaufenden Dichtungsrand (80) des Sensorbaugruppengrundkörpers (28) zusammenwirkt, ausgestattet ist, wobei auf der dem Deckelprofil (76) gegenüberliegenden Seite der Grundfläche des Deckels (14) eine heraustretenden elektrischen Anschlusskontakten (72) zugeordnete Steckdosenwandung (82) mit einer Steckerraste (84) zum rastenden Verbinden mit einem Stecker ausgeformt ist.

10. Durchflussmessgerät nach Anspruch 8 oder 9, **dadurch gekennzeichnet, dass** die Auswertelektronik (38) auf einer Leiterplatte (36) ungeordnet ist, die in der Sensorbaugruppe (12) zwischen dem Sensorbaugruppengrundkörper (28) und dem Deckel (14) festgeklemmt ist.

11. Verfahren zur Herstellung eines Durchflussmessgeräts nach einem der Ansprüche 1 bis 10, **gekennzeichnet durch** die folgenden Schritte:
a) dichtendes Einsetzen einer Hülse (30) mit einem piezoelektrischen Sensorelement (32) in eine Ausnehmung (34) eines Sensorbaugruppengrundkörpers (28);
b) Einsetzen einer Auswertelektronik (38) in einen zentralen, zylinderförmigen Innenraum des Sensorbaugruppengrundkörpers (28) und Herstellen eines elektrischen Kontakts zwischen einer Auswertelektronik (38) und elektrischen Anschlussdrähten (64) des piezoelektrischen Sensorelements (32);
c) dichtendes Aufsetzen bzw. Einsetzen der den Sensorbaugruppengrundkörper (28) aufweisenden sowie das Sensorelement (32) und die Auswerteelektronik (38) aufnehmenden Sensorbaugruppe (12) in eine Aufnahme (42) eines Rohrelements (10), und
d) Befestigen und Sichern der Sensorbaugruppe (12) am Rohrelement (10) **durch** Schliessen einer Verschlusskappe (16).

12. Verfahren nach Anspruch 11 zum Herstellen eines Durchflussmessgeräts nach einem der Ansprüche 8 bis 10, **dadurch gekennzeichnet, dass** ein Schritt:
e) dichtendes Aufsetzen und Einrasten eines Deckels (14) auf den Sensorbaugruppengrundkörper (28) zum Verschliessen der Sensorbaugruppe (12) nach dem Schritt b) durchgeführt wird.

13. Verfahren nach Anspruch 11, **dadurch gekennzeichnet, dass** die Herstellung des elektrischen Kontakts zwischen der Auswertelektronik (38) und den elektrischen Anschlussdrähten (64) des piezoelektrischen Sensorelements (32) durch Schweissen erfolgt.

14. Verfahren nach Anspruch 11, **dadurch gekennzeichnet, dass** die Befestigung und Sicherung der Sensorbaugruppe (12) am Rohrelement (10) durch Schliessen eines Bajonettverschlusses (88) einer Verschlusskappe (16) erfolgt.

## Claims

1. Flowmeter based on the vortex principle, having a pipe element (10) which forms a flow channel (18) and is equipped with connecting ports (20), which are arranged in the end regions, for connection to a pipeline system,
a baffle body (26) with break-away edges (52) which generate vortices in a medium (M) flowing in a flow direction (F) in the flow channel (18), and
a plate-like piezoelectric sensor element (32) which is surrounded by an elastic sleeve (30) in order to provide protection against the medium (M), which plugs into a recess (34) in a sensor assembly main body (28) and which extends through an opening (48) in the flow channel (18) and, as a result of this, generates an electrical signal depending on the flow rate of the medium (M) owing to the effect of the vortices, the said signal being further processed by an evaluation electronics system (38) which is electrically connected to the piezoelectric sensor element (32), wherein the baffle body (26) is an integral constituent part of the sensor assembly main body (28) and the sensor assembly main body (28) is accommodated in a receptacle (42) of the pipe element (10), **characterized by** a sensor assembly (12) which is independently inserted into the pipe element (19) in a sealing manner and comprises the sensor assembly main body (28) and also accommodates the sensor element (32) and the evaluation electronics system (38), wherein the evaluation electronics system (38) takes up a space in a central, cylindrical interior (40) of the sensor assembly main body (28).

2. Flowmeter according to Claim 1, **characterized in that** the pipe element (10) has an opening (27) for inserting the baffle body (26) and a further opening (48) for inserting the sleeve (30) containing the piezoelectric sensor element (32).

3. Flowmeter according to Claim 1 or 2, **characterized in that** the piezoelectric sensor element (32) is adhesively bonded by means of adhesive (58) and/or is encapsulated in the sleeve (30) at a free end region, which projects into the flow channel (18), and/or at an end region, which is fixed with respect to the sensor assembly main body (28) and is accommodated in an inner sleeve (60) which is latched in the sleeve (30), the sleeve (30) containing the piezoelectric sensor element (32) being inserted into the sensor assembly main body (28) in a sealing manner.

4. Flowmeter according to one of Claims 1 to 3, **characterized in that** the sleeve (30) firstly increases the length of an action area (68) for the vortices, which bend the piezoelectric sensor element (32), along the longitudinal axis of the sensor element (32) into the flow channel (18) and/or secondly increases the size of the action area (68) parallel to the flow direction (F) of the medium (M) in order to increase the bending of the piezoelectric sensor element (32) in a lever-like manner.

5. Flowmeter according to one of Claims 1 to 4, **characterized in that** the sensor assembly main body (28) is produced from a plastic using the injection-moulding technique.

6. Flowmeter according to one of Claims 1 to 5, **characterized in that** the pipe element (10) is manufactured from a plastic or metal and, perpendicular to the longitudinal axis of the pipe element (10), has slots (24) for inserting a fastening clip (22), intended to interact with a groove in the pipeline system in a fastening manner, on the connecting port (20).

7. Flowmeter according to one of Claims 1 to 6, **characterized in that** a closure cap (16) fastens the sensor assembly (12) to the pipe element (10) by means of a quick-action closure, preferably by means of a bayonet fitting (88).

8. Flowmeter according to one of Claims 1 to 7, **characterized in that** the sensor assembly (12) is closed by a cover (14) in a sealing manner.

9. Flowmeter according to Claim 8, **characterized in that** the cover (14) is of bowl-like design and is equipped with a substantially circular base surface and a circumferential, substantially U-shaped cover profile (76) which preferably projects in a virtually perpendicular manner from the base surface and which interacts with a likewise circumferential sealing edge (80) of the sensor assembly main body (28) in a sealing manner, wherein a socket wall (82), which is associated with projecting electrical connection contacts (72) and has a plug catch (84) for latching connection to a plug, is formed on that side of the base surface of the cover (14) which is situated opposite the cover profile (76).

10. Flowmeter according to Claim 8 or 9, **characterized in that** the evaluation electronics system (38) is arranged on a printed circuit board (36) which is firmly clamped in the sensor assembly (12) between the sensor assembly main body (28) and the cover (14).

11. Method for producing a flowmeter according to one of Claims 1 to 10, **characterized by** the following steps:
a) inserting a sleeve (30) containing a piezoelectric sensor element (32) into a recess (34) in a sensor assembly main body (28) in a sealing manner;
b) inserting an evaluation electronics system (38) into a central, cylindrical interior of the sensor assembly main body (28) and establishing electrical contact between an evaluation electronics system (38) and electrical connection wires (64) of the piezoelectric sensor element (32);
c) mounting or inserting the sensor assembly (12), which comprises the sensor assembly main body (28) and also accommodates the sensor element (32) and the evaluation electronics system (38), in a receptacle (42) of a pipe element (10) in a sealing manner; and
d) fastening and securing the sensor assembly (12) to the pipe element (10) by closing a closure cap (16).

12. Method according to Claim 11 for producing a flowmeter according to one of Claims 8 to 10, **characterized in that** a step of:
e) mounting and latching a cover (14) onto the sensor assembly main body (28) in a sealing manner for closing the sensor assembly (12) according to step b) is carried out.

13. Method according to Claim 11, **characterized in that** the electrical contact between the evaluation electronics system (38) and the electrical connection wires (64) of the piezoelectric sensor element (32) is established by welding.

14. Method according to Claim 11, **characterized in that** the sensor assembly (12) is fastened and secured to the pipe element (10) by closing a bayonet fitting (88) of a closure cap (16).

## Revendications

1. Débitmètre basé sur le principe du vortex, comportant un élément de tube (10) qui forme un canal d'écoulement (18) et qui est équipé de raccords (20) disposés dans les régions d'extrémité pour le raccordement à un système de canalisations,
un corps de retenue (26) muni de bords de rupture (52) qui produisent des tourbillons dans un milieu (M) s'écoulant dans le canal d'écoulement (18) dans une direction d'écoulement (F), et
un élément capteur piézoélectrique (32) en forme de plaque entouré par un manchon élastique (30) destiné à assurer la protection vis-à-vis du milieu (M), lequel capteur est fiché dans un évidement (34) d'un corps de base de bloc-capteur (28) et pénètre à travers une ouverture (48) dans le canal d'écoulement (18) et génère ainsi un signal électrique provoqué par l'action des tourbillons en fonction du débit du milieu (M), lequel signal est ensuite soumis à un traitement par une électronique d'évaluation (38) reliée électriquement à l'élément capteur piézoélectrique (32), le corps de retenue (26) faisant partie intégrante du corps de base de bloc-capteur (28) et le corps de base de bloc-capteur (28) étant logé dans un réceptacle (42) de l'élément de tube (10), **caractérisé par** un bloc-capteur (12) qui est inséré de manière autonome et étanche dans l'élément de tube (19) et comporte le corps de base de bloc-capteur (28) et accueille l'élément capteur (32) ainsi que l'électronique d'évaluation (38), l'électronique d'évaluation (38) occupant un emplacement dans un espace intérieur cylindrique central (40) du corps de base de bloc-capteur (28).

2. Débitmètre selon la revendication 1, **caractérisé en ce que** l'élément de tube (10) comporte une ouverture (27) destinée à l'introduction du corps de retenue (26) et une autre ouverture (48) destinée à l'introduction du manchon (30) avec l'élément capteur piézoélectrique (32).

3. Débitmètre selon la revendication 1 ou 2, **caractérisé en ce que** l'élément capteur piézoélectrique (32) est collé au moyen d'un adhésif (58) et/ou encapsulé sur une région d'extrémité libre faisant saillie à l'intérieur du canal d'écoulement (18) dans le manchon (30) et/ou sur une région d'extrémité fixe par rapport au corps de base de bloc-capteur (28), qui est logée dans un manchon intérieur (60) encliqueté dans le manchon (30), et **en ce que** le manchon (30), avec l'élément capteur piézoélectrique (32), est inséré de manière étanche dans le corps de base de bloc-capteur (28).

4. Débitmètre selon l'une quelconque des revendications 1 à 3, **caractérisé en ce que** le manchon (30) prolonge une surface d'attaque (68) destinée aux tourbillons provoquant une courbure de l'élément capteur piézoélectrique (32) d'une part le long de l'axe longitudinal de l'élément capteur (32) dans le canal d'écoulement (18) et/ou d'autre part agrandit la surface d'attaque (68) parallèlement à la direction d'écoulement (F) du milieu (M) afin d'augmenter à la manière d'un levier la courbure de l'élément capteur piézoélectrique (32).

5. Débitmètre selon l'une quelconque des revendications 1 à 4, **caractérisé en ce que** le corps de base de bloc-capteur (28) est réalisé par moulage par injection à partir d'une matière plastique.

6. Débitmètre selon l'une quelconque des revendications 1 à 5, **caractérisé en ce que** l'élément de tube (10) est constitué d'une matière plastique ou d'un métal et comporte des fentes (24) sur des raccords (20) perpendiculairement à l'axe longitudinal de l'élément de tube (10) pour l'introduction d'un clip de fixation (22), prédéterminé pour coopérer en vue de la fixation avec une rainure dans le système de canalisations.

7. Débitmètre selon l'une quelconque des revendications 1 à 6, **caractérisé en ce qu'**un capuchon (16) fixe le bloc-capteur (12) à l'élément de tube (10) au moyen d'une fermeture rapide, de préférence au moyen d'une fermeture à baïonnette (88).

8. Débitmètre selon l'une quelconque des revendications 1 à 7, **caractérisé en ce que** le bloc-capteur (12) est fermé de manière étanche par un couvercle (14).

9. Débitmètre selon la revendication 8, **caractérisé en ce que** le couvercle (14) est réalisé sous la forme d'une coque et est doté d'une surface de base sensiblement circulaire et d'un profil de couvercle (76) circonférentiel sensiblement en forme de U, s'étendant de préférence sensiblement perpendiculairement à partir de la surface de base, lequel profil de couvercle coopère de manière étanche avec un rebord d'étanchéité (80) également circonférentiel du corps de base de bloc-capteur (28), une paroi pour prises (82) associée à des contacts de raccordement électriques (72) sortant du côté de la surface de base du couvercle (14) qui est opposé au profil de couvercle (76) étant formée avec un cliquet de connecteur (84) destiné à être relié par encliquetage à un connecteur.

10. Débitmètre selon la revendication 8 ou 9, **caractérisé en ce que** l'électronique d'évaluation (38) est disposée sur un carte de circuit imprimé (36) qui est fermement fixée dans le bloc-capteur (12) entre le corps de base de bloc-capteur (28) et le couvercle (14).

11. Procédé de fabrication d'un débitmètre selon l'une quelconque des revendications 1 à 10, **caractérisé par** les étapes suivantes:
a) insérer de manière étanche un manchon (30) avec un élément capteur piézoélectrique (32) dans un évidement (34) d'un corps de base de bloc-capteur (28) ;
b) insérer une électronique d'évaluation (38) dans un espace intérieur cylindrique central du corps de base de bloc-capteur (28) et établir un contact électrique entre une électronique d'évaluation (38) et des fils électriques de raccordement (64) de l'élément capteur piézoélectrique (32) ;
c) coiffer ou insérer de manière étanche le bloc-capteur (12), comportant le corps de base de bloc-capteur (28) et accueillant l'élément capteur (32) ainsi que l'électronique d'évaluation (38), dans un réceptacle (42) d'un élément de tube (10), et
d) fixer et immobiliser le bloc-capteur (12) sur l'élément de tube (10) par fermeture d'un capuchon (16).

12. Procédé selon la revendication 11, destiné à la fabrication d'un débitmètre selon l'une quelconque des revendications 8 à 10, **caractérisé par** une étape :
e) consistant à coiffer et encliqueter de manière étanche un couvercle (14) sur le corps de base de bloc-capteur (28) pour fermer le bloc-capteur (12) qui est effectuée après l'étape b).

13. Procédé selon la revendication 11, **caractérisé en ce que** l'établissement du contact électrique entre l'électronique d'évaluation (38) et les fils électriques de raccordement (64) de l'élément capteur piézoélectrique (32) s'effectue par soudage.

14. Procédé selon la revendication 11, **caractérisé en ce que** la fixation et l'immobilisation du bloc-capteur (12) sur l'élément de tube (10) s'effectuent par fermeture d'une fermeture à baïonnette (88) d'un capuchon (16).
